# EUROPEAN PATENT SPECIFICATION

(11) **EP 4 488 936 B1**
(45) Date of publication and mention of the grant of the patent: **14.10.2026**
(21) Application number: 24709286.9
(22) Date of filing: 06.02.2024
(51) Int. Cl.: G06N 3/08, G06N 3/0464, G06T 7/00, G01N 21/88

(54) **LITHIUM-BATTERY WELD SEAM DEFECT DETECTION METHOD AND SYSTEM, AND STORAGE MEDIUM**
VERFAHREN UND SYSTEM ZUR ERKENNUNG VON SCHWEISSNAHTDEFEKTEN EINER LITHIUMBATTERIE UND SPEICHERMEDIUM
PROCÉDÉ ET SYSTÈME DE DÉTECTION DE DÉFAUT DE CORDON DE SOUDURE DE BATTERIE AU LITHIUM, ET SUPPORT DE STOCKAGE

(30) Priority: 19.05.2023 CN 202310565762
(43) Date of publication of application: 08.01.2025
(73) Proprietor: Xiamen Weiya Intelligent Technology Co., Ltd, Huli District Xiamen, Fujian 361000 (CN); Xiamen Vitu Software Technology Co., Ltd, Xiamen, Fujian 361000 (CN)
(72) Inventor: CHEN, Yu, Xiamen, Fujian 361000 (CN); HE, JunLin, Xiamen, Fujian 361000 (CN)
(74) Representative: Chung, Hoi Kan
(86) International application number: PCT/CN2024/076282
(87) International publication number: WO 2024/239719

(56) References cited:
- CN-A- 114 119 464
- CN-A- 115 239 625
- CN-A- 115 797 354
- CN-A- 116 309 576

## Description

### TECHNICAL FIELD

The present invention relates to the technical field of computer vision, and particularly relates to a method for detecting a weld defect of a lithium battery, a system for detecting a weld defect of a lithium battery applying the method, and a computer readable storage medium.

### BACKGROUND

Lithium batteries are a kind of batteries with a lithium metal or a lithium alloy as a cathode/anode material using a non-aqueous electrolyte solution. With the development of micro-electronic techniques in the twentieth century, the number of miniaturized devices increase day by day, which sets a very high demand on a power supply. As a result, lithium batteries enter a large-scaled usage stage and are widely applied in mobile phones, notebook computers, power tools, electric vehicles, standby power supplies for streetlights, navigation lamps, and micro household electrical appliances.

Due to the active chemical property of the lithium metal, the processing, storing and using of the lithium metal place a very high demand on the environment. At present, weld defect detection in the lithium battery industry mainly relies on experience-based judgment by visual inspection personnel or defects are detected by way of combining a visual inspection device with manual visual inspection.

As for manual visual inspection, owing to various and diverse defects of the lithium battery in the welding process, it is difficult to clearly define various defects by manual visual inspection. Moreover, judging the weld defect of each individual lithium battery by means of the visual inspection personnel is time consuming and is susceptible to considerable subjectivity in a detection result. This may easily result in inconsistent detection results when the same lithium battery is judged by different visual inspection personnel, and therefore, the quality control of a product cannot be guaranteed.

As for defect detection that relies on the visual inspection devices, because the visual inspection devices on the market lack capacity to detect the weld of the lithium battery, and most are restricted to detection of concave-convex defects, they cannot detect defects such as weld excursion, pinholes, fine spikes, uneven welds and the like effectively, and can only use manual visual inspection as a supplementary measuring means.

CN114119464 A discloses a method for detecting a weld defect of a lithium battery, wherein point cloud data obtained from a depth map are analysed in order to detect large convex and concave defects.

In summary, there are problems of a poor detection effect and a low efficiency for the weld of the lithium battery in the prior art.

### SUMMARY

A main objective of the present invention is to provide a method and system for detecting a weld defect of a lithium battery, and a storage medium, which aims to solve the technical problem of a poor detection effect and a low efficiency of an existing method for detecting a weld defect of a lithium battery.

To achieve the above object, the present invention provides a method for detecting a weld defect of a lithium battery, including the following steps: S100: acquiring a depth image and a 2D grayscale image of a battery cell of the lithium battery, and performing filtering processing; S200: extracting defect detection areas on the filtered depth image of the battery cell to obtain detection areas corresponding to defects of various types, the detection areas including a concave and convex defect detection area, a weld excursion detection area and a pinhole defect detection area; S300: generating a three-dimensional linear point cloud corresponding to each detection area according to the depth image; and S400: performing parallel computing on the depth images and the three-dimensional linear point clouds of the detection areas, respectively, to detect corresponding defects, where S400 includes one of the following steps: S410: detecting defects in the concave and convex defect detection area based on a Quickhull algorithm and an Euclidean distance-based nearest neighbor search method; S420: detecting defects in the weld excursion detection area based on AI defect detection and 3D defect detection; and S430: detecting defects in the pinhole defect detection area based on the Quickhull algorithm and a YOLO target detection network model.

Optionally, in the step S100, the filtering processing is mean value filtering processing.

Optionally, when the point cloud is generated in the step S300 according to the depth image, each row and each column of the depth image are traversed, and pixels in each row are converted into the point clouds, and the point clouds are stored separately to obtain a three-dimensional single-row point cloud set corresponding to each detection area.

Optionally, the step S410 at least includes the following steps: S411: converting the three-dimensional linear point cloud into a facet structure based on the Quickhull algorithm, and performing uniform sampling on a convex hull to generate convex hull point clouds as same as the weld point clouds in point number; S412: acquiring a neighbor point of each point nearest to each point in the weld point cloud in the convex hull point cloud, and calculating a distance between each point in the weld point cloud and the nearest neighbor point corresponding thereto; S413: judging whether the distance between each point in the weld point cloud and the nearest neighbor point corresponding thereto is greater than a first preset threshold; if the distance between each point in the weld point cloud and the nearest neighbor point corresponding thereto is greater than the first preset threshold, determining the point as a defect point; and if the distance between each point in the weld point cloud and the nearest neighbor point corresponding thereto is not greater than the first preset threshold, determining the point as a non-defect point; and S414: segmenting the defect point by means of the Euclidean distance-based nearest neighbor search method, and segmenting the point clouds of the detect point in a same set to form a defect point set.

Optionally, the step S420 at least includes the following steps: S421: calculating a curvature numerical value corresponding to each point on the depth image to obtain a curvature image; S422: performing color rendering processing on the 2D grayscale image according to the curvature numerical value and an image depth to form a pseudo color image for recognition training of an AI model, and learning, by the AI model, a pre-collected defect data set through training to detect a weld excursion defect, so as to obtain an AI defect detection result; S423: calculating a normal vector and a curvature value of each point cloud in the weld excursion detection area, and reordering the point clouds in the weld excursion detection area, to obtain ordered point clouds; and acquiring a maximum value of a normal vector included angle and a curvature change mean value of the point clouds in a single row, and judging whether the maximum value of the normal vector included angle is greater than a second preset threshold and whether the curvature change mean value is greater than a third preset threshold; if the maximum value of the normal vector is greater than the second preset threshold and the curvature change mean value is greater than the third preset threshold, reserving the point clouds in the row and using the point clouds as suspected defect point clouds; and if the maximum value of the normal vector is not greater than the second preset threshold and the curvature change mean value is not greater than the third preset threshold, determining that there is no suspected defect point clouds; S424: performing circle fitting on the point clouds in each row in the weld excursion detection area to obtain a distribution condition of a center of a circle, a radius, and a weld height, filtering qualified circles according to preset qualification parameters, and secondarily judging the suspected defect point clouds judged in S423, and if the point clouds in the same row are judged as qualified circles, inducing the suspected defect point clouds as qualified point clouds; S425: judging whether an imaginary trajectory is straight by taking the centers of circles calculated from all qualified point clouds by circle fitting as the imaginary trajectory; if the imaginary trajectory is straight, a welding trajectory being normal; and if the imaginary trajectory is not straight, the welding trajectory excursing, thereby obtaining a 3D defect detection result, and executing S426; S426: calculating a distance between the center of circle and a straight line for each point according to straight line fitting, and by taking calculation results as excursion quantities, selecting a maximum value in the excursion quantities as a weld excursion output value; and S427: merging the AI defect detection result obtained in S422 with the 3D defect detection result obtained in S425, and reserving a same defect result in a same set to obtain a defect point set.

Optionally, the circle fitting in the step S424 or the straight line fitting in the step S426 includes the following steps: step Sa: inputting a point cloud to be fitted; step Sb: randomly selecting m data points; step Sc: calculating to obtain a circle model or a straight line model according to the m data points; step Sd: traversing the point cloud to be fitted, and calculating a distance from each point to the circle model or the straight line model; step Se: judging whether the distance is greater than a preset distance threshold; if the distance is greater than the preset distance threshold, determining that the point is not a point in the circle model or the straight line model; and if the distance is less than or equal to the preset distance threshold, determining that the point is a point in the circle model or the straight line model; and step Sf: judging whether a point number in the circle model or the straight line model is greater than a preset point number threshold; if the point number in the circle model or the straight line model is greater than the preset point number threshold, selecting all points in the circle model or the straight line model as the data points, and re-calculating the model; and if the point number in the circle model or the straight line model is less than or equal to the preset point number threshold, returning to the step Sb.

Optionally, the step S430 at least includes the following steps: S431: extracting a point cloud of an aluminum shell plane of the lithium battery, to obtain a convex hull of the point cloud of the aluminum shell plane by the Quickhull algorithm; S432: judging whether there is a vertex higher than the aluminum shell plane or lower than the aluminum shell plane in the convex hull; if there is a vertex higher than the aluminum shell plane or lower than the aluminum shell plane in the convex hull, executing the step S433; and if there is no vertex higher than the aluminum shell plane or lower than the aluminum shell plane in the convex hull, determining that there is no defect point; S433: using the points within a preset radius range as a first class of suspected defect point clouds taking the vertex as the center of a circle; S434: calculating the normal vector included angles and curvature characteristics of the first class of suspected defect point clouds, and acquiring a second class of suspected defect point clouds based on a clustering algorithm of region growing; S435: comparing the two classes of defect point clouds and reserving same point clouds to form a defect point set; S436: calculating defect information according to a defect point cloud bounding box, segmenting position areas corresponding to the defects on the 2D image according to the defect point clouds, and inputting the position areas into the YOLO target detection network model for defect detection; and S437: comprehensively judging a defect detection score of the position area according to a confidence level of the YOLO target detection network model and the defect information, and judging whether the defect detection score is greater than a fourth preset threshold; if the defect detection score is greater than the fourth preset threshold, determining that there is an actual defect; and if the defect detection score is not greater than the fourth preset threshold, determining that there is no actual defect.

Optionally, the acquiring a second class of suspected defect point clouds based on a clustering algorithm of region growing includes: considering the point cloud of the aluminum shell plane as a smooth plane point cloud, and calculating the normal vectors and curvature values of all points of the point cloud of the aluminum shell plane; randomly selecting any point in the point cloud of the aluminum shell plane as an initial point, successively comparing the normal vector included angles and curvature difference values between the initial point and the remaining points, and judging whether the normal vector included angles are greater than a fifth preset threshold and whether the curvature difference values are greater than a sixth preset threshold; and classifying the points with the normal vector included angles less than or equal to the fifth preset threshold and the curvature difference values less than or equal to the sixth preset threshold into a cluster set as a same class of points; and classifying the points with the normal vector included angles greater than the fifth preset threshold and the curvature difference values greater than the sixth preset threshold into the second class of suspected defect point clouds.

Optionally, the method further includes a step S500: acquiring different types of defect point clouds, calculating secondary detection parameters of the defects, and confirming whether there are corresponding defects in the lithium battery; where the step S500 comprises: S510: acquiring different types of defect point clouds, and calculating a spatial bounding box of the defect point set; S520: calculating the secondary detection parameters of the defects based on the spatial bounding box of the defect point set, the secondary detection parameters at least including a length, a width, a height, a projection area, and a curvature value of the defect point set, where a calculation process includes: calculating a length, a width and a height of the spatial bounding box, and using calculation results as the length, the width, and the height of the defect point set; calculating an area of a two-dimensional projective plane of the defect point set, and a curvature value of each point in the defect point set, summating the curvature values of all points and performing averaging, and using a calculation result as the curvature value of the defect point set; and S530: judging whether the secondary detection parameters all are greater than corresponding thresholds according to a project specification and the corresponding thresholds of the secondary detection parameters of the defect point set, if the secondary detection parameters all are greater than the corresponding thresholds, confirming that there are corresponding defects in the lithium battery, and if the secondary detection parameters all are not greater than the corresponding thresholds, judging that there are no corresponding defects in the lithium battery.

Corresponding to the method for detecting a weld defect of a lithium battery, the present invention provides a system for detecting a weld defect of a lithium battery to carry out the aforementioned methods, including: an image acquisition module, configured to acquire a depth image and a 2D grayscale image of a battery cell of the lithium battery, and perform filtering processing; a detection area extraction module, configured to extract defect detection areas on the filtered depth image of the battery cell to obtain detection areas corresponding to various defects, the detection areas including a concave and convex defect detection area, a weld excursion detection area and a pinhole defect detection area; a point cloud generation module, configured to generate a three-dimensional linear point cloud corresponding to each detection area according to the depth image; and a defect detection module, configured to perform parallel computing on the depth images and the three-dimensional linear point clouds of the detection areas, respectively, to detect corresponding defects, where the defect detection module includes a concave and convex defect detection module, a weld excursion detection module, and a pinhole defect detection module; the concave and convex defect detection module is configured to detect defects in the concave and convex defect detection area based on a Quickhull algorithm and an Euclidean distance-based nearest neighbor search method; the weld excursion detection module is configured to detect defects in the weld excursion detection area based on AI defect detection and 3D defect detection; and the pinhole defect detection module is configured to detect defects in the pinhole defect detection area based on the Quickhull algorithm and a YOLO target detection network model.

In addition, to achieve the above object, the present invention further provides a computer readable storage medium, having a program for detecting a weld defect of a lithium battery stored thereon, where the program, when executed by a processor, implements the steps of the method for detecting a weld defect of a lithium battery.

The present invention has the following beneficial effects:
(1) Different types of defects in different detection areas are detected, respectively by extracting the defect detection area, and the requirement on weld detection of the lithium battery in the industry can be substantially satisfied, and a quality detection requirement on the battery weld in the new energy industry is achieved without the need for manual visual inspection, so that refined automatic detection of the defect of the lithium battery is achieved, the defect of a battery cell can be rapidly and accurately extracted, the detection effect is improved, and the labor cost is reduced and the detection efficiency is improved;
(2) average filtering is performed on the depth image; the algorithm is less complex than a three-dimensional point cloud, so that operation time of the algorithm can be shortened; since there is likely to be some fine noisy points (for example, small spikes) in the depth image of the battery cell, the noisy points can be effectively removed by way of average filtering, so that interference on a subsequent detect detection step is reduced;
(3) Thanks to randomness of the point cloud, when the point clouds are generated according to the depth image, and the point clouds are stored according to a row and column arrangement of the two-dimensional depth image, to obtain ordered point clouds;
(4) By detecting the concave-convex defect detection area, whether there is a concave defect or convex defect on the weld can be judged accurately, and the defect points are further segmented based on the Euclidean distance-based nearest neighbor search method, so that the defect point set can be rapidly obtained;
(5) By detecting the weld excursion detection area, the weld excursion detection defects can be automatically detected, and the detection effect and accuracy are further improved by way of joint detection by 3D and AI;
(6) By detecting the pinhole defect detection area, fine defects such as slag, pinholes and fine spikes easily generated in a battery cell welding process can be accurately defined; by means of a strategy of initial defect positioning through 3D and AI model assistant judgment, the pinhole defect detection area is judged comprehensively, so that the detection effect, the accuracy and the efficiency are further improved.

### BRIEF DESCRIPTION OF DRAWINGS

The drawings described herein are used for providing further understanding of the present invention, as a constitute part of the present invention. The illustrative examples of the present invention and the description thereof serve to explain the present invention, instead of limiting same improperly. In the drawings,
FIG. 1 is a brief flow diagram of a method for detecting a weld defect of a lithium battery in the present invention;

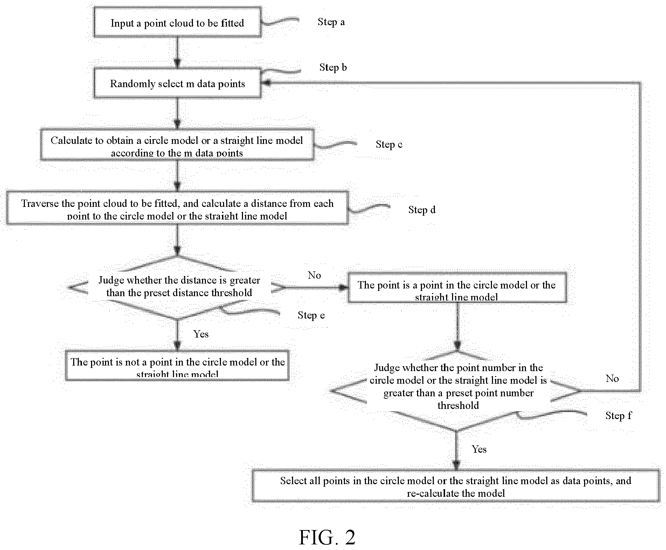

FIG. 2 is a brief flow diagram of specific steps of circle fitting or straight line fitting.

### DESCRIPTION OF EMBODIMENTS

In order to make objects, technical solutions and advantages of the embodiments of the present invention clearer, description will be made on technical solution in the embodiment of the present invention below in combination with drawings in the embodiment of the present invention. It is apparent that the described embodiments are a part of embodiments of the present invention rather than all the embodiments. It should be understood that the specific embodiments described herein are merely used for explaining the present invention and are not used for limiting the present invention. On the basis of the embodiments in the present invention, all other embodiments obtained by those of ordinary skill in the art without making creative efforts fall into the scope of protection of the present invention.

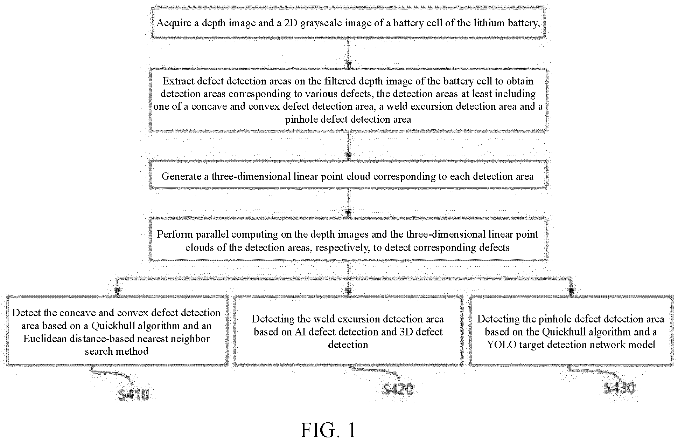

As shown in FIG. 1, the present invention provides a method for detecting a weld defect of a lithium battery, including the following steps: S100: acquiring a depth image and a 2D grayscale image of a battery cell of the lithium battery, and performing filtering processing; S200: extracting defect detection areas on the filtered depth image of the battery cell to obtain detection areas corresponding to various defects, the detection areas at least including one of a concave and convex defect detection area, a weld excursion detection area and a pinhole defect detection area; S300: generating a three-dimensional linear point cloud corresponding to each detection area according to the depth image; and S400: performing parallel computing on the depth images and the three-dimensional linear point clouds of the detection areas, respectively, to detect corresponding defects, where S400 at least includes one of the following steps: S410: detecting the concave and convex defect detection area based on a Quickhull algorithm and an Euclidean distance-based nearest neighbor search method; S420: detecting the weld excursion detection area based on AI defect detection and 3D defect detection; and S430: detecting the pinhole defect detection area based on the Quickhull algorithm and a YOLO target detection network model.

Different types of defects in different detection areas are detected, respectively by extracting the defect detection area, and the requirement on weld detection of the lithium battery in the industry can be substantially covered, and a quality detection requirement on the battery weld in the new energy industry is achieved, refined automatic detection of the defect of the lithium battery is achieved without manual visual inspection, the defect of a battery cell can be rapidly and accurately extracted, the detection effect is more excellent, and the human cost is saved and the detection efficiency is improved.

In the embodiment, in the step S100, the filtering processing is mean value filtering processing.

In the present invention, average filtering is performed on the depth image; the algorithm complexity is lower than a three-dimensional point cloud, so that the algorithm operation time can be shortened; because there will be some fine noisy points (for example, small spikes) in the depth image of the battery cell, the noisy points can be effectively removed by way of average filtering, so that interference on a subsequent detect detection step can be reduced.

In the embodiment, when the point cloud is generated in the step S300 according to the depth image, each row and each column of the depth image are traversed, and pixels in each row are converted into the point clouds, and the point clouds are stored separately to obtain a three-dimensional single-row point cloud set corresponding to each detection area. Because the pixels are stored in row and column distribution for the depth image, each row and column of the depth image are traversed, the pixels of the depth image in each row are converted into the point clouds, the point cloud in each row can be regarded as a single point cloud, and internal sorting of the point cloud relies on the columns of the image. For example, the point cloud in the first row and the first column of the depth image is the first point of the point cloud in the first row, and the point cloud in the second row and the first column is the first point of the point cloud in the second row, by parity of reasoning.

Thanks to randomness of the point cloud, when the point clouds are generated according to the depth image, and the point clouds are stored according to a row and column arrangement of the depth image, to obtain ordered point clouds.

The concave-convex defect detection and the weld excursion detection are detection for the weld because of uneven weld or insufficient welding caused by energy change, unstable welding gun device, a poor preset trajectory deviation and the like in the welding process.

In the embodiment, the step S410 at least includes the following steps: S411: converting the three-dimensional linear point cloud into a facet structure based on the Quickhull algorithm, and performing uniform sampling on a convex hull to generate convex hull point clouds as same as the weld point clouds in point number; S412: acquiring a neighbor point of each point nearest to each point in the weld point cloud in the convex hull point cloud, and calculating a distance between each point in the weld point cloud and the nearest neighbor point corresponding thereto; S413: judging whether the distance between each point in the weld point cloud and the nearest neighbor point corresponding thereto is greater than a first preset threshold; if the distance between each point in the weld point cloud and the nearest neighbor point corresponding thereto is greater than the first preset threshold, determining the point as a defect point; and if the distance between each point in the weld point cloud and the nearest neighbor point corresponding thereto is not greater than the first preset threshold, determining the point as a non-defect point; and S414: segmenting the defect point by means of the Euclidean distance-based nearest neighbor search method, and segmenting the point clouds of the detect point in a same set to form a defect point set.

By detecting the concave-convex defect detection area, whether there is a concave defect or convex defect on the weld can be accurately judged; if there is the concave defect or convex defect on the weld, a height difference between the defect and the point cloud of the hull will be formed, resulting in a condition that the point cloud of the hull at the defect is higher than the point cloud of the weld; therefore, in further combination with the first preset threshold, the defect point can be rapidly acquired.

Because the obtained defect points are orderless point clouds spatially, a set cannot be formed. Defect physical properties such as length, width and height of a single defect point in the space cannot be calculated. Therefore, the defect point is then segmented by means of the Euclidean distance-based nearest neighbor search method, so as to obtain a defect point set quickly.

In the embodiment, the step S420 at least includes the following steps: S421: calculating a curvature numerical value corresponding to each point on the depth image to obtain a curvature image; S422: performing color rendering processing on the 2D grayscale image according to the curvature numerical value and an image depth to form a pseudo color image for recognition training of an AI model, and learning, by the AI model, a pre-collected defect data set through training to detect a weld excursion defect, so as to obtain an AI defect detection result; S423: calculating a normal vector and a curvature value of each point cloud in the weld excursion detection area, and reordering the point clouds in the weld excursion detection area, to obtain ordered point clouds; and acquiring a maximum value of a normal vector included angle and a curvature change mean value of the point clouds in a single row, and judging whether the maximum value of the normal vector included angle is greater than a second preset threshold and whether the curvature change mean value is greater than a third preset threshold; if the maximum value of the normal vector is greater than the second preset threshold and the curvature change mean value is greater than the third preset threshold, reserving the point clouds in the row and using the point clouds as suspected defect point clouds; and if the maximum value of the normal vector is not greater than the second preset threshold and the curvature change mean value is not greater than the third preset threshold, determining that there are no suspected defect point clouds; S424: performing circle fitting on the point clouds in each row in the weld excursion detection area to obtain a distribution condition of a center of a circle, a radius, and a weld height, filtering qualified circles according to preset qualification parameters, and secondarily judging the suspected defect point clouds judged in S423, and if the point clouds in the same row are judged as qualified circles, inducing the suspected defect point clouds as qualified point clouds; S425: judging whether an imaginary trajectory is straight by taking the centers of circles calculated from all qualified point clouds by circle fitting as the imaginary trajectory; if the imaginary trajectory is straight, a welding trajectory being normal; and if the imaginary trajectory is not straight, the welding trajectory excursing, thereby obtaining a 3D defect detection result, and executing S426; S426: calculating a distance between the center of circle and a straight line for each point according to straight line fitting, and by taking calculation results as excursion quantities, selecting a maximum value in the excursion quantities as a weld excursion output value; and S427: merging the AI defect detection result obtained in S422 with the 3D defect detection result obtained in S425, and reserving a same defect result in a same set to obtain a defect point set.

Because the grayscale image only has grayscale numerical value information, weld characteristics in the pseudo color image can also be identified by the depth of the pseudo color and different colors on the basis of reserving the grayscale information. Therefore, to perform color rendering processing on the 2D grayscale image to form the pseudo color image is more apt to AI model training.

Preferably, the reordering the point clouds in the weld excursion detection to obtain the ordered point clouds includes: converting pixels in each row into a corresponding row of point clouds according to row and column distribution of the depth image, and storing the point clouds separately to obtain the ordered point clouds.

A welding gun will form welds in arc shape in welding. Under a normal circumstance, curvature values of the welds are close without sudden change of curvature, and a face of weld is smooth and is higher than a top cap surface area. For the weld with the weld excursion defect, the weld is easy to present a sharp edge or a straight weld, with large change of curvature before and after welding. Therefore, aiming at the characteristic, the difference values between the maximum curvature values and the minimum curvature values of the point clouds in the single row are calculated, the average value of curvature change is solved according to the point number of the single row, the suspected defect point clouds are detected, and circle fitting is performed to obtain the distribution condition of the center of the circle, the radius, and the weld height, and then the qualified circles can be filtered according to preset qualification parameters, thereby laying a foundation for subsequently judging whether the welding trajectory is normal.

Circle fitting is two-dimensional fitting. Therefore, circle fitting is performed on the point clouds in each row in the weld excursion detection area in the step S424, respectively, and in this case, the point cloud input information is information in two directions x and z. The number of circles corresponds to the number of rows of the point clouds. There are as many circles as point clouds in the rows.

Preferably, the preset qualification parameters at least include the preset radius threshold and the requirement on distribution of the preset welding height. Qualified circles can be filtered by judging whether the radius meets the preset radius threshold and the distribution of the preset welding height meets the preset parameter requirement.

In the embodiment, the curvature change refers to a curvature change trend of the point clouds in a row. The curvature change trend is obtained by calculating the curvature values of the point clouds in the row. Then, the mean value of the curvature values in the row is taken to obtain the curvature change mean value.

The circle fitting in the step S424 or the straight line fitting in the step S426 includes the following steps: step Sa: inputting a point cloud to be fitted; step Sb: randomly selecting m data points; step Sc: calculating to obtain a circle model or a straight line model according to the m data points; step Sd: traversing the point cloud to be fitted, and calculating a distance from each point to the circle model or the straight line model; step Se: judging whether the distance is greater than a preset distance threshold; if the distance is greater than the preset distance threshold, determining that the point is not a point in the circle model or the straight line model; and if the distance is less than or equal to the preset distance threshold, determining that the point is a point in the circle model or the straight line model; and step Sf: judging whether a point number in the circle model or the straight line model is greater than a preset point number threshold; if the point number in the circle model or the straight line model is greater than the preset point number threshold, selecting all points in the circle model or the straight line model as the data points, and re-calculating the model; and if the point number in the circle model or the straight line model is less than or equal to the preset point number threshold, returning to the step Sb.

The circle model is a standard circle made based on the center of circle and the radius calculated by circle fitting. The distance from each point to the circle model is calculated in the step d, which is taken as a basis to determine whether the circle is close to the standard circle. Preferably, the distance between each point and the nearest point of the standard circle is calculated or the distance from each pint to the center of circle is calculated.

For the weld excursion defect, defect data is trained through the YOLO target detection network model by way of joint detection by 3D and AI. A conventional grayscale image training mode acquires limited data information, with relatively abstract characteristics learned, and cannot obtain more abundant information such as curvature and gradient like a 2D image processing technique. For weld detection with diverse defects, the effect is poor. The present invention can realize automatic detection of the weld excursion defect, not only can capture feature information such as grayscale and depth of the defect and quantitative information such as range and dimension of the defect in the 2D space, but also can acquire the curvature distribution information of the weld as learning data, and further improve the detection effect and accuracy by way of joint detection by 3D and AI.

In the embodiment, the step S430 at least includes the following steps: S431: extracting a point cloud of an aluminum shell plane of the lithium battery, to obtain a convex hull of the point cloud of the aluminum shell plane by the Quickhull algorithm; S432: judging whether there is a vertex higher than the aluminum shell plane or lower than the aluminum shell plane in the convex hull; if there is a vertex higher than the aluminum shell plane or lower than the aluminum shell plane in the convex hull, executing the step S433; and if there is no vertex higher than the aluminum shell plane or lower than the aluminum shell plane in the convex hull, determining that there is no defect point; S433: using the points within a preset radius range as a first class of suspected defect point clouds taking the vertex as the center of a circle; S434: calculating the normal vector included angles and curvature characteristics of the first class of suspected defect point clouds, and acquiring a second class of suspected defect point clouds based on a clustering algorithm of region growing; S435: comparing the two classes of defect point clouds and reserving same point clouds to form a defect point set; S436: calculating defect information according to a defect point cloud bounding box, segmenting position areas corresponding to the defects on the 2D image according to the defect point clouds, and inputting the position areas into the YOLO target detection network model for defect detection; and S437: comprehensively judging a defect detection score of the position area according to a confidence level of the YOLO target detection network model and the defect information, and judging whether the defect detection score is greater than a fourth preset threshold; if the defect detection score is greater than the fourth preset threshold, determining that there is an actual defect; and if the defect detection score is not greater than the fourth preset threshold, determining that there is no actual defect.

In the embodiment, the segmenting the position areas corresponding to the defects in the 2D image according to the defected point clouds in the step S436 includes: calculating pixel positions in the corresponding 2D image through a camera resolution according to the coordinates X and Y of each point in the defected point clouds, so as to segment the position areas corresponding to the defects.

Preferably, the preset radius range is 0.5 mm.

Thanks to problems in the welding process and the problems of cleaning degrees of devices, slag, pinholes, fine spikes and the like are easily generated in the battery cell welding process. The pinhole defect is likely to cause liquid leakage of the battery cell, which results in severe safety accidents. The slag and spikes will cover the defect or hinder subsequent battery cell packaging. This type of defects is often small and widely distributed, so that it is difficult to define the defects accurately. If a 2D image technique is used to detect the defect, the defect feature is easily blurred in the filtering process, with a miss kill condition. In addition, in industrial production, it is difficult to collect defect images, and samples are short, which is likely to cause insufficient AI model training and high misjudgment rate.

Therefore, fine defects such as slag, pinholes and fine spikes easily generated in the battery cell welding process can be accurately defined by means of a strategy of initial defect positioning through 3D and AI model assistant judgment.

A common case of the lithium battery includes three parts: an aluminum shell plane wrapped at the periphery, a top cap surface capped above and a weld formed by welding. The defects such as pinholes and fine spikes often appear on the aluminum shell plane; the aluminum shell plane of the battery cell is usually rolled; the obtained hull shall conventionally be a flat cuboid; and affected by the fine spikes and pinholes, the hull will be higher than the aluminum shell plane or lower than the top of the aluminum shell plane.

By means of initial positioning and assistant judgment, the pinhole defect detection area is judged comprehensively, so that the detection effect, the accuracy and the efficiency are further improved.

In the embodiment, the acquiring a second class of suspected defect point clouds based on a clustering algorithm of region growing includes: considering the point cloud of the aluminum shell plane as a smooth plane point cloud, and calculating the normal vectors and curvature values of all points of the point cloud of the aluminum shell plane; randomly selecting any point in the point cloud of the aluminum shell plane as an initial point, successively comparing the normal vector included angles and curvature difference values between the initial point and the remaining points, and judging whether the normal vector included angles are greater than a fifth preset threshold and whether the curvature difference values are greater than a sixth preset threshold; and classifying the points with the normal vector included angles less than or equal to the fifth preset threshold and the curvature difference values less than or equal to the sixth preset threshold into a cluster set as a same class of points; and classifying the points with the normal vector included angles greater than the fifth preset threshold and the curvature difference values greater than the sixth preset threshold into the second class of suspected defect point clouds.

The disparate point between the clustering algorithm based on region growing and the step S423 lies in that the method of comparing multiple points in the area is used in the step S423; the clustering algorithm based on region growing acquires the second class of suspected defect point clouds by point-to-point comparison, so that it is not needed to acquire the maximum value of the normal vector included angle and it is only needed to calculate the normal vector included angle between two points. The clustering algorithm based on region growing is to find like points. For the plane, the normal vector included angles of the neighbor points are extremely small, the normal vectors tend to be consistent, and the corresponding curvature values tend to be consistent as well. Therefore, normal plane point clouds can be obtained by the above method. For the part exceeding the threshold, it can be considered as the suspected defect point clouds.

In the embodiment, the method for detecting a defect of a weld of a lithium battery further includes a step S500: acquiring different types of defect point clouds, calculating secondary detection parameters of the defects, and confirming whether there are corresponding defects in the lithium battery; the step S500 includes: S510: acquiring different types of defect point clouds, and calculating a spatial bounding box of the defect point set; S520: calculating the secondary detection parameters of the defects based on the spatial bounding box of the defect point set, the secondary detection parameters at least comprising a length, a width, a height, a projection area, and a curvature value of the defect point set, where a calculation process includes: calculating a length, a width and a height of the spatial bounding box, and using calculated results as the length, the width, and the height of the defect point set; calculating an area of a two-dimensional projective plane of the defect point set, and a curvature value of each point in the defect point set, summating the curvature values of all points and performing averaging, and using a calculated result as the curvature value of the defect point set; and S530: judging whether the secondary detection parameters all are greater than corresponding thresholds according to a project specification and corresponding thresholds of the secondary detection parameters of the defect point set, if the secondary detection parameters all are greater than corresponding thresholds, confirming that there are corresponding defects in the lithium battery, and if the secondary detection parameters all are not greater than corresponding thresholds, judging that there are no corresponding defects in the lithium battery.

Preferably, the curvature values of the defect point set can also be controlled by the maximum curvature value, which includes: calculating the curvature value of each point in the defect point set, taking the maximum value, and using the maximum value as the curvature value of the defect point set.

Because a client may have a specific requirement on specification of defects, it is usually needed to take different measures for defects with different specifications, and products with small defects can also be taken as OK products. Therefore, by calculating the secondary detection parameters, performing secondary detection on the defect point set and confirming whether the lithium battery has corresponding defects to further control the misjudgment rate, the misjudgment rate is reduced.

Corresponding to the method for detecting a weld defect of a lithium battery, the present invention provides a system for detecting a weld defect of a lithium battery, including: an image acquisition module, configured to acquire a depth image and a 2D grayscale image of a battery cell of the lithium battery, and perform filtering processing; a detection area extraction module, configured to extract defect detection areas on the filtered depth image of the battery cell to obtain detection areas corresponding to various defects, the detection areas at least including one of a concave and convex defect detection area, a weld excursion detection area and a pinhole defect detection area; a point cloud generation module, configured to generate a three-dimensional linear point cloud corresponding to each detection area according to the depth image; and a defect detection module, configured to perform parallel computing on the depth images and the three-dimensional linear point clouds of the detection areas, respectively, to detect corresponding defects, where the defect detection module at least comprises one of a concave and convex defect detection module, a weld excursion detection module, and a pinhole defect detection module; the concave and convex defect detection module is configured to detect the concave and convex defect detection area based on a Quickhull algorithm and an Euclidean distance-based nearest neighbor search method; the weld excursion detection module is configured to detect the weld excursion detection area based on AI defect detection and 3D defect detection; and the pinhole defect detection module is configured to detect the pinhole defect detection area based on the Quickhull algorithm and a YOLO target detection network model.

The present invention further provides a computer readable storage medium which can be the computer readable storage medium included in the memory in the embodiment or the computer readable storage medium which exists independently and is not assembled in the electronic device. The computer readable storage medium has a program for detecting a weld defect of a lithium battery stored thereon, where the program, when executed by a processor, implements the steps of the method for detecting a weld defect of a lithium battery. The readable storage medium can be a read-only memory, a magnetic disc or an optical disc.

It is to be noted that each embodiment of the description is described in a progressive manner, each embodiment focuses on differences from other embodiments, and the same and similar parts between the embodiments may refer to each other. As far as the apparatus embodiment, the device embodiment and the storage medium embodiment are concerned, as the embodiments are substantially similar to the method embodiment, the embodiments are described simply. The related part refers to description of the embodiment of the method.

Furthermore, the terms "comprising", "including" or any other variants herein are intended to cover the non-exclusive including, thereby making that the process, method, object or apparatus comprising a series of elements comprise not only those elements but also other elements that are not listed explicitly or the inherent elements to the process, method, merchandise or apparatus. Under a circumstance of no more limitations, for the elements defined by the term "include one", a condition that there are additional same elements in the process, method, article or apparatus including the elements is not excluded.

The above description illustrates and describes the preferred embodiments of the present invention. It shall be understood that the present invention is not limited to the form disclosed herein, shall not be regarded as exclusion of other embodiments, can be used in various other combinations, modifications and environments, and can be altered through the above teaching or techniques or knowledge in related art within a scope of conception of the present invention. Modifications and variations made by those skilled in the art without departing from the scope of the present invention shall all fall within the scope of protection of the appended claims of the present invention.

## Claims

1. A method for detecting a weld defect of a lithium battery, comprisingthe following steps:
S100: acquiring a depth image and a 2D grayscale image of a battery cell of the lithium battery, and performing filtering processing;
S200: extracting defect detection areas on the filtered depth image of the battery cell to obtain detection areas corresponding to defects of various types, the detection areas including a concave and convex defect detection area, a weld excursion detection area and a pinhole defect detection area;
S300: generating a three-dimensional linear point cloud corresponding to each detection area according to the depth image; and
S400: performing parallel computing on the depth images and the three-dimensional linear point clouds of the detection areas, respectively, to detect corresponding defects, wherein S400 comprises the following steps:
S410: detecting defects in the concave and convex defect detection area based on a Quickhull algorithm and an Euclidean distance-based nearest neighbor search method;
S420: detecting defects in the weld excursion detection area based on AI defect detection and 3D defect detection; and
S430: detecting defects in the pinhole defect detection area based on the Quickhull algorithm and a YOLO target detection network model; and the step S420 at least comprises the following steps:
S421: calculating a curvature numerical value corresponding to each point on the depth image to obtain a curvature image;
S422: performing color rendering processing on the 2D grayscale image according to the curvature numerical value and an image depth to form a pseudo color image for recognition training of an AI model, and learning, by the AI model, a pre-collected defect data set through training to detect a weld excursion defect, so as to obtain an AI defect detection result;
S423: calculating a normal vector and a curvature value of each point cloud in the weld excursion detection area, and reordering the point clouds in the weld excursion detection area, to obtain ordered point clouds; and acquiring a maximum value of a normal vector included angle and a curvature change mean value of the point clouds in a single row, and judging whether the maximum value of the normal vector included angle is greater than a second preset threshold and whether the curvature change mean value is greater than a third preset threshold; if the maximum value of the normal vector is greater than the second preset threshold and the curvature change mean value is greater than the third preset threshold, reserving the point clouds in the row and using the point clouds as suspected defect point clouds; and if the maximum value of the normal vector is not greater than the second preset threshold and the curvature change mean value is not greater than the third preset threshold, determining that there is no suspected defect point clouds;
S424: performing circle fitting on the point clouds in each row in the weld excursion detection area to obtain a distribution condition of a center of a circle, a radius, and a weld height, filtering qualified circles according to preset qualification parameters, and secondarily judging the suspected defect point clouds judged in S423, and if the point clouds in the same row are judged as qualified circles, inducing the suspected defect point clouds as qualified point clouds;
S425: judging whether an imaginary trajectory is straight by taking the centers of circles calculated from all qualified point clouds by circle fitting as the imaginary trajectory; if the imaginary trajectory is straight, a welding trajectory being normal; and if the imaginary trajectory is not straight, the welding trajectory excursing, thereby obtaining a 3D defect detection result, and executing S426;
S426: calculating a distance between the center of circle and a straight line for each point according to straight line fitting, and by taking calculation results as excursion quantities, selecting a maximum value in the excursion quantities as a weld excursion output value; and
S427: merging the AI defect detection result obtained in S422 with the 3D defect detection result obtained in S425, and reserving a same defect result in a same set to obtain a defect point set.

2. The method for detecting a weld defect of a lithium battery according to claim 1, whereinin the step S100, the filtering processing is mean value filtering processing.

3. The method for detecting a weld defect of a lithium battery according to claim 1, wherein
when the point cloud is generated in the step S300 according to the depth image, each row and each column of the depth image are traversed, and pixels in each row are converted into the point clouds, and the point clouds are stored separately to generate a three-dimensional single-row point cloud set corresponding to each detection area.

4. The method for detecting a weld defect of a lithium battery according to claim 1, whereinthe step S410 at least comprises the following steps:
S411: converting the three-dimensional linear point cloud into a facet structure based on the Quickhull algorithm, and performing uniform sampling on a convex hull to generate convex hull point clouds as same as the weld point clouds in point number;
S412: acquiring a neighbor point of each point nearest to each point in the weld point cloud in the convex hull point cloud, and calculating a distance between each point in the weld point cloud and the nearest neighbor point corresponding thereto;
S413: judging whether the distance between each point in the weld point cloud and the nearest neighbor point corresponding thereto is greater than a first preset threshold; if the distance between each point in the weld point cloud and the nearest neighbor point corresponding thereto is greater than the first preset threshold, determining the point as a defect point; and if the distance between each point in the weld point cloud and the nearest neighbor point corresponding thereto is not greater than the first preset threshold, determining the point as a non-defect point; and
S414: segmenting the defect point by means of the Euclidean distance-based nearest neighbor search method, and segmenting the point clouds of the detect point in a same set to form a defect point set.

5. The method for detecting a weld defect of a lithium battery according to claim 1, whereinthe circle fitting in the step S424 or the straight line fitting in the step S426 comprises the following steps:
step Sa: inputting a point cloud to be fitted;
step Sb: randomly selecting m data points;
step Sc: calculating to obtain a circle model or a straight line model according to the m data points;
step Sd: traversing the point cloud to be fitted, and calculating a distance from each point to the circle model or the straight line model;
step Se: judging whether the distance is greater than a preset distance threshold; if the distance is greater than the preset distance threshold, determining that the point is not a point in the circle model or the straight line model; and if the distance is less than or equal to the preset distance threshold, determining that the point is a point in the circle model or the straight line model; and
step Sf: judging whether a point number in the circle model or the straight line model is greater than a preset point number threshold; if the point number in the circle model or the straight line model is greater than the preset point number threshold, selecting all points in the circle model or the straight line model as the data points, and re-calculating the model; and if the point number in the circle model or the straight line model is less than or equal to the preset point number threshold, returning to the step Sb.

6. The method for detecting a weld defect of a lithium battery according to claim 1, whereinthe step S430 at least comprises the following steps:
S431: extracting a point cloud of an aluminum shell plane of the lithium battery, to obtain a convex hull of the point cloud of the aluminum shell plane by the Quickhull algorithm;
S432: judging whether there is a vertex higher than the aluminum shell plane or lower than the aluminum shell plane in the convex hull; if there is a vertex higher than the aluminum shell plane or lower than the aluminum shell plane in the convex hull, executing a step S433; and if there is no vertex higher than the aluminum shell plane or lower than the aluminum shell plane in the convex hull, determining that there is no defect point;
S433: using the points within a preset radius range as a first class of suspected defect point clouds taking the vertex as the center of a circle;
S434: calculating the normal vector included angles and curvature characteristics of the first class of suspected defect point clouds, and acquiring a second class of suspected defect point clouds based on a clustering algorithm of region growing;
S435: comparing the two classes of defect point clouds and reserving same point clouds to form a defect point set;
S436: calculating defect information according to a defect point cloud bounding box, segmenting position areas corresponding to the defects on the 2D image according to the defect point clouds, and inputting the position areas into the YOLO target detection network model for defect detection; and
S437: comprehensively judging a defect detection score of the position area according to a confidence level of the YOLO target detection network model and the defect information, and judging whether the defect detection score is greater than a fourth preset threshold; if the defect detection score is greater than the fourth preset threshold, determining that there is an actual defect; and if the defect detection score is not greater than the fourth preset threshold, determining that there is no actual defect.

7. The method for detecting a weld defect of a lithium battery according to claim 6, wherein the acquiring a second class of suspected defect point clouds based on a clustering algorithm of region growing comprises:
considering the point cloud of the aluminum shell plane as a smooth plane point cloud, and calculating the normal vectors and curvature values of all points of the point cloud of the aluminum shell plane;
randomly selecting any point in the point cloud of the aluminum shell plane as an initial point, successively comparing the normal vector included angles and curvature difference values between the initial point and the remaining points, and judging whether the normal vector included angles are greater than a fifth preset threshold and whether the curvature difference values are greater than a sixth preset threshold; and
classifying the points with the normal vector included angles less than or equal to the fifth preset threshold and the curvature difference values less than or equal to the sixth preset threshold into a cluster set as a same class of points; and classifying the points with the normal vector included angles greater than the fifth preset threshold and the curvature difference values greater than the sixth preset threshold into the second class of suspected defect point clouds.

8. The method for detecting a weld defect of a lithium battery according to claim 1, further comprisinga step S500: acquiring different types of defect point clouds, calculating secondary detection parameters of the defects, and confirming whether there are corresponding defects in the lithium battery; wherein the step S500 comprises:
S510: acquiring different types of defect point clouds, and calculating a spatial bounding box of the defect point set;
S520: calculating the secondary detection parameters of the defects based on the spatial bounding box of the defect point set, the secondary detection parameters at least comprising a length, a width, a height, a projection area, and a curvature value of the defect point set, wherein a calculation process comprises: calculating a length, a width and a height of the spatial bounding box, and using calculation results as the length, the width, and the height of the defect point set; calculating an area of a two-dimensional projective plane of the defect point set, and a curvature value of each point in the defect point set, summating the curvature values of all points and performing averaging, and using a calculation result as the curvature value of the defect point set; and
S530: judging whether the secondary detection parameters all are greater than corresponding thresholds according to a project specification and the corresponding thresholds of the secondary detection parameters of the defect point set, if all of the secondary detection parameters are greater than the corresponding thresholds, confirming that there are corresponding defects in the lithium battery, and if not, judging that there are no corresponding defects in the lithium battery.

9. A system for detecting a weld defect of a lithium battery which is configured to carry out the method according to any one of claims 1 to 8, said system comprising:
an image acquisition module, configured to acquire a depth image and a 2D grayscale image of a battery cell of the lithium battery, and perform filtering processing;
a detection area extraction module, configured to extract defect detection areas on the filtered depth image of the battery cell to obtain detection areas corresponding defects various types, the detection areas including a concave and convex defect detection area, a weld excursion detection area and a pinhole defect detection area;
a point cloud generation module, configured to generate a three-dimensional linear point cloud corresponding to each detection area according to the depth image; and
a defect detection module, configured to perform parallel computing on the depth images and the three-dimensional linear point clouds of the detection areas, respectively, to detect corresponding defects, wherein the defect detection module comprises a concave and convex defect detection module, a weld excursion detection module, and a pinhole defect detection module; wherein
the concave and convex defect detection module is configured to detect defects in the concave and convex defect detection area based on a Quickhull algorithm and an Euclidean distance-based nearest neighbor search method; and
the weld excursion detection module is configured to detect defects in the weld excursion detection area based on AI defect detection and 3D defect detection; and
the pinhole defect detection module is configured to detect defects in the pinhole defect detection area based on the Quickhull algorithm and a YOLO target detection network model.

10. A computer readable storage medium, havinga program for detecting a weld defect of a lithium battery stored thereon, wherein the program, when executed by a processor, implements the steps of the method for detecting a weld defect of a lithium battery according to any one of claims 1-8.

## Patentansprüche

1. Verfahren zur Erkennung eines Schweißfehlers einer Lithiumbatterie, umfassend die folgenden Schritte:
S100: Erfassen eines Tiefenbildes und eines 2D-Graustufenbildes einer Batteriezelle der Lithiumbatterie und Durchführen einer Filterverarbeitung;
S200: Extrahieren von Fehlererkennungsbereichen auf dem gefilterten Tiefenbild der Batteriezelle, um Erkennungsbereiche zu erhalten, die verschiedenen Fehlerarten entsprechen, wobei die Erkennungsbereiche mindestens einen aus einem Erkennungsbereich für Konkav- und Konvexfehler, einem Erkennungsbereich für Schweißabweichung und einem Erkennungsbereich für Lochfehler umfassen;
S300: Erzeugen einer dreidimensionalen linearen Punktwolke entsprechend jedem Erkennungsbereich aus dem Tiefenbild; und
S400: Durchführen einer parallelen Berechnung auf den Tiefenbildern und den dreidimensionalen linearen Punktwolken der Erkennungsbereiche, jeweils zur Erkennung entsprechender Fehler, wobei S400 mindestens einen der folgenden Schritte umfasst:
S410: Erkennen des Erkennungsbereichs für Konkav- und Konvexfehler basierend auf einem Quickhull-Algorithmus und einem auf euklidischer Distanz basierenden Verfahren zur Suche des nächsten Nachbarn;
S420: Erkennen des Erkennungsbereichs für Schweißabweichung basierend auf KI-Fehlererkennung und 3D-Fehlererkennung; und
S430: Erkennen des Erkennungsbereichs für Lochfehler basierend auf dem Quickhull-Algorithmus und einem YOLO-Objekterkennungsnetzwerkmodell; und
wobei der Schritt S420 mindestens die folgenden Schritte umfasst:
S421: Berechnen eines Krümmungswerts entsprechend jedem Punkt auf dem Tiefenbild, um ein Krümmungsbild zu erhalten;
S422: Durchführen einer Farbgebung des 2D-Graustufenbildes gemäß dem Krümmungswert und einer Bildtiefe, um ein Falschfarbenbild für das Erkennungstraining eines KI-Modells zu bilden, und Erlernen, durch das KI-Modell, eines vorab gesammelten Fehlerdatensatzes durch Training, um einen Schweißabweichungsfehler zu erkennen, um so ein KI-Fehlererkennungsergebnis zu erhalten;
S423: Berechnen eines Normalenvektors und eines Krümmungswerts jeder Punktwolke im Erkennungsbereich für Schweißabweichung und Neuordnen der Punktwolken im Erkennungsbereich für Schweißabweichung, um geordnete Punktwolken zu erhalten; und Erfassen eines Maximalwerts eines Normalenvektorwinkels und eines mittleren Krümmungsänderungswerts der Punktwolken in einer einzelnen Zeile, und Beurteilen, ob der Maximalwert des Normalenvektorwinkels größer als ein zweiter vorgegebener Schwellwert ist und ob der mittlere Krümmungsänderungswert größer als ein dritter vorgegebener Schwellwert ist; falls der Maximalwert des Normalenvektorwinkels größer als der zweite vorgegebene Schwellwert ist und der mittlere Krümmungsänderungswert größer als der dritte vorgegebene Schwellwert ist, Beibehalten der Punktwolken in dieser Zeile und Verwenden derselben als verdächtige Fehlerpunktwolken; und falls der Maximalwert des Normalenvektorwinkels nicht größer als der zweite vorgegebene Schwellwert ist und der mittlere Krümmungsänderungswert nicht größer als der dritte vorgegebene Schwellwert ist, Feststellen, dass keine verdächtigen Fehlerpunktwolken vorliegen;
S424: Durchführen einer Kreisanpassung an den Punktwolken in jeder Zeile im Erkennungsbereich für Schweißabweichung, um eine Verteilung eines Kreismittelpunkts, eines Radius und einer Schweißhöhe zu erhalten, Filtern von qualifizierten Kreisen gemäß vorgegebenen Qualifikationsparametern und erneutes Beurteilen der in S423 als verdächtig beurteilten Punktwolken, und falls die Punktwolken in derselben Zeile als qualifizierte Kreise beurteilt werden, Einstufen der verdächtigen Fehlerpunktwolken als qualifizierte Punktwolken;
S425: Beurteilen, ob eine imaginäre Bahn gerade ist, indem die aus allen qualifizierten Punktwolken durch Kreisanpassung berechneten Kreismittelpunkte als die imaginäre Bahn genommen werden; falls die imaginäre Bahn gerade ist, ist die Schweißbahn normal; und falls die imaginäre Bahn nicht gerade ist, weicht die Schweißbahn ab, wodurch ein 3D-Fehlererkennungsergebnis erhalten wird, und Ausführen von S426;
S426: Berechnen eines Abstands zwischen dem Kreismittelpunkt und einer Geraden für jeden Punkt gemäß einer Geradenanpassung, und durch Verwendung der Berechnungsergebnisse als Abweichungsbeträge, Auswählen eines Maximalwerts unter den Abweichungsbeträgen als Ausgabewert der Schweißabweichung; und
S427: Zusammenführen des in S422 erhaltenen KI-Fehlererkennungsergebnisses mit dem in S425 erhaltenen 3D-Fehlererkennungsergebnis, und Beibehalten desselben Fehlerergebnisses in derselben Menge, um eine Fehlerpunktmenge zu erhalten.

2. Verfahren zur Erkennung eines Schweißfehlers einer Lithiumbatterie nach Anspruch 1, wobei im Schritt S100 die Filterverarbeitung eine Mittelwertfilterverarbeitung ist.

3. Verfahren zur Erkennung eines Schweißfehlers einer Lithiumbatterie nach Anspruch 1, wobei bei der Erzeugung der Punktwolke im Schritt S300 aus dem Tiefenbild jede Zeile und jede Spalte des Tiefenbildes durchlaufen werden und die Pixel in jeder Zeile in die Punktwolken umgewandelt werden, und die Punktwolken getrennt gespeichert werden, um einen dreidimensionalen einzeiligen Punktwolkensatz entsprechend jedem Erkennungsbereich zu erzeugen.

4. Verfahren zur Erkennung eines Schweißfehlers einer Lithiumbatterie nach Anspruch 1, wobei der Schritt S410 mindestens die folgenden Schritte umfasst:
S411: Umwandeln der dreidimensionalen linearen Punktwolke in eine Facettenstruktur basierend auf dem Quickhull-Algorithmus, und Durchführen einer gleichmäßigen Abtastung auf einer konvexen Hülle, um konvexe-Hüllen-Punktwolken zu erzeugen, die in der Punktzahl den Schweißpunktwolken entsprechen;
S412: Erfassen eines nächsten Nachbarpunkts für jeden Punkt in der Schweißpunktwolke aus der konvexen-Hüllen-Punktwolke, und Berechnen eines Abstands zwischen jedem Punkt in der Schweißpunktwolke und dem entsprechenden nächsten Nachbarpunkt;
S413: Beurteilen, ob der Abstand zwischen jedem Punkt in der Schweißpunktwolke und dem entsprechenden nächsten Nachbarpunkt größer als ein erster vorgegebener Schwellwert ist; falls der Abstand größer als der erste vorgegebene Schwellwert ist, Betrachten des Punkts als Fehlerpunkt; und falls der Abstand nicht größer als der erste vorgegebene Schwellwert ist, Betrachten des Punkts als Nicht-Fehlerpunkt; und
S414: Segmentieren des Fehlerpunkts mittels des auf euklidischer Distanz basierenden Verfahrens zur Suche des nächsten Nachbarn, und Segmentieren der Punktwolken der Fehlerpunkte in derselben Menge, um eine Fehlerpunktmenge zu bilden.

5. Verfahren zur Erkennung eines Schweißfehlers einer Lithiumbatterie nach Anspruch 1, wobei die Kreisanpassung im Schritt S424 oder die Geradenanpassung im Schritt S426 spezifisch die folgenden Schritte umfasst:
Schritt Sa: Eingeben einer anzupassenden Punktwolke;
Schritt Sb: Zufälliges Auswählen von m Datenpunkten;
Schritt Sc: Berechnen, um ein Kreismodell oder ein Geradenmodell gemäß den m Datenpunkten zu erhalten;
Schritt Sd: Durchlaufen der anzupassenden Punktwolke und Berechnen eines Abstands von jedem Punkt zu dem Kreismodell oder dem Geradenmodell;
Schritt Se: Beurteilen, ob der Abstand größer als ein vorgegebener Abstandsschwellwert ist; falls der Abstand größer als der vorgegebene Abstandsschwellwert ist, Betrachten, dass der Punkt nicht ein Punkt in dem Kreismodell oder dem Geradenmodell ist; und falls der Abstand kleiner oder gleich dem vorgegebenen Abstandsschwellwert ist, Betrachten, dass der Punkt ein Punkt in dem Kreismodell oder dem Geradenmodell ist; und
Schritt Sf: Beurteilen, ob eine Punktanzahl in dem Kreismodell oder dem Geradenmodell größer als ein vorgegebener Punktanzahlschwellwert ist; falls die Punktanzahl in dem Kreismodell oder dem Geradenmodell größer als der vorgegebene Punktanzahlschwellwert ist, Auswählen aller Punkte in dem Kreismodell oder dem Geradenmodell als Datenpunkte und erneutes Berechnen des Modells; und falls die Punktanzahl in dem Kreismodell oder dem Geradenmodell kleiner oder gleich dem vorgegebenen Punktanzahlschwellwert ist, Zurückkehren zu Schritt Sb.

6. Verfahren zur Erkennung eines Schweißfehlers einer Lithiumbatterie nach Anspruch 1, wobei der Schritt S430 mindestens die folgenden Schritte umfasst:
S431: Extrahieren einer Punktwolke einer Aluminiumgehäuseebene der Lithiumbatterie, um eine konvexe Hülle der Punktwolke der Aluminiumgehäuseebene durch den Quickhull-Algorithmus zu erhalten;
S432: Beurteilen, ob es in der konvexen Hülle einen Scheitelpunkt gibt, der höher als die Aluminiumgehäuseebene oder tiefer als die Aluminiumgehäuseebene ist; falls es einen Scheitelpunkt gibt, der höher oder tiefer als die Aluminiumgehäuseebene ist, Ausführen eines Schritts S433; und falls es keinen Scheitelpunkt gibt, der höher oder tiefer als die Aluminiumgehäuseebene ist, Betrachten, dass kein Fehlerpunkt vorhanden ist;
S433: Verwenden der Punkte innerhalb eines vorgegebenen Radiusbereichs um den Scheitelpunkt als eine erste Klasse von verdächtigen Fehlerpunktwolken, wobei der Scheitelpunkt als Kreismittelpunkt genommen wird;
S434: Berechnen der Normalenvektorwinkel und Krümmungsmerkmale der ersten Klasse von verdächtigen Fehlerpunktwolken, und Erhalten einer zweiten Klasse von verdächtigen Fehlerpunktwolken basierend auf einem Cluster-Algorithmus des Regionenwachstums;
S435: Vergleichen der beiden Klassen von Fehlerpunktwolken und Beibehalten gleicher Punktwolken, um eine Fehlerpunktmenge zu bilden;
S436: Berechnen von Fehlerinformationen gemäß einer Begrenzungsbox der Fehlerpunktwolke, Segmentieren von Positionsbereichen, die den Fehlern auf dem 2D-Bild entsprechen, gemäß den Fehlerpunktwolken, und Eingeben der Positionsbereiche in das YOLO-Objekterkennungsnetzwerkmodell zur Fehlererkennung; und
S437: Ganzheitliches Beurteilen einer Fehlererkennungsbewertung des Positionsbereichs gemäß einem Konfidenzniveau des YOLO-Objekterkennungsnetzwerkmodells und den Fehlerinformationen, und Beurteilen, ob die Fehlererkennungsbewertung größer als ein vierter vorgegebener Schwellwert ist; falls die Fehlererkennungsbewertung größer als der vierte vorgegebene Schwellwert ist, Betrachten, dass ein tatsächlicher Fehler vorliegt; und falls die Fehlererkennungsbewertung nicht größer als der vierte vorgegebene Schwellwert ist, Betrachten, dass kein tatsächlicher Fehler vorliegt.

7. Verfahren zur Erkennung eines Schweißfehlers einer Lithiumbatterie nach Anspruch 6, wobei das Erhalten einer zweiten Klasse von verdächtigen Fehlerpunktwolken basierend auf einem Cluster-Algorithmus des Regionenwachstums spezifisch umfasst:
Betrachten der Punktwolke der Aluminiumgehäuseebene als eine glatte ebene Punktwolke, und Berechnen der Normalenvektoren und Krümmungswerte aller Punkte der Punktwolke der Aluminiumgehäuseebene;
zufälliges Auswählen eines beliebigen Punkts in der Punktwolke der Aluminiumgehäuseebene als Anfangspunkt, aufeinanderfolgendes Vergleichen der Normalenvektorwinkel und Krümmungsdifferenzwerte zwischen dem Anfangspunkt und den übrigen Punkten, und Beurteilen, ob die Normalenvektorwinkel größer als ein fünfter vorgegebener Schwellwert sind und ob die Krümmungsdifferenzwerte größer als ein sechster vorgegebener Schwellwert sind; und
Klassifizieren der Punkte, deren Normalenvektorwinkel kleiner oder gleich dem fünften vorgegebenen Schwellwert sind und deren Krümmungsdifferenzwerte kleiner oder gleich dem sechsten vorgegebenen Schwellwert sind, in eine Clustermenge als Punkte derselben Klasse; und Klassifizieren der Punkte, deren Normalenvektorwinkel größer als der fünfte vorgegebene Schwellwert sind und deren Krümmungsdifferenzwerte größer als der sechste vorgegebene Schwellwert sind, in die zweite Klasse von verdächtigen Fehlerpunktwolken.

8. Verfahren zur Erkennung eines Schweißfehlers einer Lithiumbatterie nach Anspruch 1, ferner umfassend einen Schritt S500: Erfassen verschiedener Arten von Fehlerpunktwolken, Berechnen sekundärer Erkennungsparameter der Fehler und Bestätigen, ob entsprechende Fehler in der Lithiumbatterie vorhanden sind; wobei der Schritt S500 spezifisch umfasst:
S510: Erfassen verschiedener Arten von Fehlerpunktwolken und Berechnen einer räumlichen Begrenzungsbox der Fehlerpunktmenge;
S520: Berechnen der sekundären Erkennungsparameter der Fehler basierend auf der räumlichen Begrenzungsbox der Fehlerpunktmenge, wobei die sekundären Erkennungsparameter mindestens eine Länge, eine Breite, eine Höhe, eine Projektionsfläche und einen Krümmungswert der Fehlerpunktmenge umfassen, wobei ein Berechnungsprozess spezifisch umfasst: Berechnen einer Länge, einer Breite und einer Höhe der räumlichen Begrenzungsbox und Verwenden der Berechnungsergebnisse als die Länge, die Breite und die Höhe der Fehlerpunktmenge; Berechnen einer Fläche einer zweidimensionalen Projektionsebene der Fehlerpunktmenge und eines Krümmungswerts jedes Punkts in der Fehlerpunktmenge, Summieren der Krümmungswerte aller Punkte und Bilden eines Mittelwerts, und Verwenden eines Berechnungsergebnisses als den Krümmungswert der Fehlerpunktmenge; und
S530: Beurteilen, ob alle sekundären Erkennungsparameter größer als entsprechende Schwellwerte gemäß einem Projektspezifikation und den entsprechenden Schwellwerten der sekundären Erkennungsparameter der Fehlerpunktmenge sind, falls alle sekundären Erkennungsparameter größer als die entsprechenden Schwellwerte sind, Bestätigen, dass entsprechende Fehler in der Lithiumbatterie vorhanden sind, und falls nicht, Beurteilen, dass keine entsprechenden Fehler in der Lithiumbatterie vorhanden sind.

9. System zur Erkennung eines Schweißfehlers einer Lithiumbatterie, umfassend:
ein Bildaufnahmemodul, konfiguriert zum Erfassen eines Tiefenbildes und eines 2D-Graustufenbildes einer Batteriezelle der Lithiumbatterie und zum Durchführen einer Filterverarbeitung;
ein Erkennungsbereichsextraktionsmodul, konfiguriert zum Extrahieren von Fehlererkennungsbereichen auf dem gefilterten Tiefenbild der Batteriezelle, um Erkennungsbereiche zu erhalten, die verschiedenen Fehlerarten entsprechen, wobei die Erkennungsbereiche mindestens einen aus einem Erkennungsbereich für Konkav- und Konvexfehler, einem Erkennungsbereich für Schweißabweichung und einem Erkennungsbereich für Lochfehler umfassen;
ein Punktwolkenerzeugungsmodul, konfiguriert zum Erzeugen einer dreidimensionalen linearen Punktwolke entsprechend jedem Erkennungsbereich aus dem Tiefenbild; und
ein Fehlererkennungsmodul, konfiguriert zum Durchführen einer parallelen Berechnung auf den Tiefenbildern und den dreidimensionalen linearen Punktwolken der Erkennungsbereiche, jeweils zur Erkennung entsprechender Fehler, wobei das Fehlererkennungsmodul mindestens eines aus einem Konkav- und Konvexfehlererkennungsmodul, einem Schweißabweichungserkennungsmodul und einem Lochfehlererkennungsmodul umfasst;
wobei das Konkav- und Konvexfehlererkennungsmodul konfiguriert ist zum Erkennen des Erkennungsbereichs für Konkav- und Konvexfehler basierend auf einem Quickhull-Algorithmus und einem auf euklidischer Distanz basierenden Verfahren zur Suche des nächsten Nachbarn; und
das Schweißabweichungserkennungsmodul konfiguriert ist zum Erkennen des Erkennungsbereichs für Schweißabweichung basierend auf KI-Fehlererkennung und 3D-Fehlererkennung, mindestens umfassend den folgenden Schritt:
S427: Zusammenführen des in S422 erhaltenen KI-Fehlererkennungsergebnisses mit dem in S425 erhaltenen 3D-Fehlererkennungsergebnis, und Beibehalten desselben Fehlerergebnisses in derselben Menge, um eine Fehlerpunktmenge zu erhalten; und
das Lochfehlererkennungsmodul konfiguriert ist zum Erkennen des Erkennungsbereichs für Lochfehler basierend auf dem Quickhull-Algorithmus und einem YOLO-Objekterkennungsnetzwerkmodell.

10. Computerlesbares Speichermedium, auf dem ein Programm zur Erkennung eines Schweißfehlers einer Lithiumbatterie gespeichert ist, wobei das Programm bei Ausführung durch einen Prozessor die Schritte des Verfahrens zur Erkennung eines Schweißfehlers einer Lithiumbatterie nach einem der Ansprüche 1 bis 8 implementiert.

## Revendications

1. Procédé de détection d'un défaut de soudure d'une batterie au lithium, comprenant les étapes suivantes :
S100 : acquérir une image de profondeur et une image 2D en niveaux de gris d'une cellule de batterie au lithium, et effectuer un traitement de filtrage ;
S200 : extraire, sur l'image de profondeur filtrée de la cellule de batterie, des zones de détection de défauts pour obtenir des zones de détection correspondant à des défauts de divers types, les zones de détection comprenant au moins l'une parmi une zone de détection de défauts de concavité et de convexité, une zone de détection de déviation de soudure et une zone de détection de défauts de piqûre ;
S300 : générer, à partir de l'image de profondeur, un nuage de points linéaire tridimensionnel correspondant à chaque zone de détection ; et
S400 : effectuer un calcul parallèle sur les images de profondeur et les nuages de points linéaires tridimensionnels des zones de détection, respectivement, pour détecter les défauts correspondants, S400 comprenant au moins l'une des étapes suivantes :
S410 : détecter la zone de détection de défauts de concavité et de convexité sur la base d'un algorithme Quickhull et d'une méthode de recherche des plus proches voisins basée sur la distance euclidienne ;
S420 : détecter la zone de détection de déviation de soudure sur la base d'une détection de défauts par IA et d'une détection de défauts 3D ; et
S430 : détecter la zone de détection de défauts de piqûre sur la base de l'algorithme Quickhull et d'un modèle de réseau de détection d'objets YOLO ; et
l'étape S420 comprenant au moins les étapes suivantes :
S421 : calculer une valeur de courbure correspondant à chaque point sur l'image de profondeur pour obtenir une image de courbure ;
S422 : effectuer un traitement de colorisation sur l'image 2D en niveaux de gris en fonction de la valeur de courbure et d'une profondeur d'image pour former une image en fausses couleurs destinée à l'apprentissage de reconnaissance d'un modèle d'IA, et apprendre, par le modèle d'IA, un ensemble de données de défauts précollecté par entraînement pour détecter un défaut de déviation de soudure, de manière à obtenir un résultat de détection de défauts par IA ;
S423 : calculer un vecteur normal et une valeur de courbure de chaque nuage de points dans la zone de détection de déviation de soudure, et réorganiser les nuages de points dans la zone de détection de déviation de soudure pour obtenir des nuages de points ordonnés ; et acquérir une valeur maximale d'un angle entre vecteurs normaux et une valeur moyenne de variation de courbure des nuages de points dans une seule ligne, et déterminer si la valeur maximale de l'angle entre vecteurs normaux est supérieure à un deuxième seuil prédéfini et si la valeur moyenne de variation de courbure est supérieure à un troisième seuil prédéfini ; si la valeur maximale de l'angle entre vecteurs normaux est supérieure au deuxième seuil prédéfini et que la valeur moyenne de variation de courbure est supérieure au troisième seuil prédéfini, conserver les nuages de points de la ligne et les utiliser comme nuages de points suspects de défaut ; et si la valeur maximale de l'angle entre vecteurs normaux n'est pas supérieure au deuxième seuil prédéfini et que la valeur moyenne de variation de courbure n'est pas supérieure au troisième seuil prédéfini, déterminer qu'il n'y a pas de nuages de points suspects de défaut ;
S424 : effectuer un ajustement de cercle sur les nuages de points de chaque ligne dans la zone de détection de déviation de soudure pour obtenir une distribution d'un centre de cercle, d'un rayon et d'une hauteur de soudure, filtrer les cercles conformes selon des paramètres de conformité prédéfinis, et juger secondairement les nuages de points suspects de défaut jugés en S423, et si les nuages de points de la même ligne sont jugés comme des cercles conformes, induire les nuages de points suspects de défaut comme des nuages de points conformes ;
S425 : déterminer si une trajectoire fictive est droite en prenant les centres des cercles calculés à partir de tous les nuages de points conformes par ajustement de cercle comme trajectoire fictive ; si la trajectoire fictive est droite, la trajectoire de soudure est normale ; et si la trajectoire fictive n'est pas droite, la trajectoire de soudure dévie, obtenant ainsi un résultat de détection de défauts 3D, et exécuter S426 ;
S426 : calculer une distance entre le centre de cercle et une ligne droite pour chaque point selon un ajustement de ligne droite, et en prenant les résultats de calcul comme quantités de déviation, sélectionner une valeur maximale parmi les quantités de déviation comme valeur de sortie de déviation de soudure ; et
S427 : fusionner le résultat de détection de défauts par IA obtenu en S422 avec le résultat de détection de défauts 3D obtenu en S425, et conserver un même résultat de défaut dans un même ensemble pour obtenir un ensemble de points de défauts.

2. Procédé de détection d'un défaut de soudure d'une batterie au lithium selon la revendication 1, dans lequel, à l'étape S100, le traitement de filtrage est un traitement de filtrage par moyenne.

3. Procédé de détection d'un défaut de soudure d'une batterie au lithium selon la revendication 1, dans lequel, lors de la génération du nuage de points à l'étape S300 à partir de l'image de profondeur, chaque ligne et chaque colonne de l'image de profondeur sont parcourues, et les pixels de chaque ligne sont convertis en nuages de points, et les nuages de points sont stockés séparément pour générer un ensemble de nuages de points monolignes tridimensionnels correspondant à chaque zone de détection.

4. Procédé de détection d'un défaut de soudure d'une batterie au lithium selon la revendication 1, dans lequel l'étape S410 comprend au moins les étapes suivantes :
S411 : convertir le nuage de points linéaire tridimensionnel en une structure de facettes sur la base de l'algorithme Quickhull, et effectuer un échantillonnage uniforme sur une enveloppe convexe pour générer des nuages de points d'enveloppe convexe ayant le même nombre de points que les nuages de points de soudure ;
S412 : acquérir un point voisin le plus proche de chaque point dans le nuage de points d'enveloppe convexe pour chaque point du nuage de points de soudure, et calculer une distance entre chaque point du nuage de points de soudure et son point voisin le plus proche correspondant ;
S413 : déterminer si la distance entre chaque point du nuage de points de soudure et son point voisin le plus proche correspondant est supérieure à un premier seuil prédéfini ; si la distance est supérieure au premier seuil prédéfini, considérer le point comme un point de défaut ; et si la distance n'est pas supérieure au premier seuil prédéfini, considérer le point comme un point non défectueux ; et
S414 : segmenter le point de défaut au moyen de la méthode de recherche des plus proches voisins basée sur la distance euclidienne, et segmenter les nuages de points des points de défaut dans un même ensemble pour former un ensemble de points de défauts.

5. Procédé de détection d'un défaut de soudure d'une batterie au lithium selon la revendication 1, dans lequel l'ajustement de cercle de l'étape S424 ou l'ajustement de ligne droite de l'étape S426 comprend spécifiquement les étapes suivantes :
étape Sa : entrer un nuage de points à ajuster ;
étape Sb : sélectionner aléatoirement m points de données ;
étape Sc : calculer pour obtenir un modèle de cercle ou un modèle de ligne droite à partir des m points de données ;
étape Sd : parcourir le nuage de points à ajuster, et calculer une distance de chaque point au modèle de cercle ou au modèle de ligne droite ;
étape Se : déterminer si la distance est supérieure à un seuil de distance prédéfini ; si la distance est supérieure au seuil de distance prédéfini, considérer que le point n'est pas un point du modèle de cercle ou du modèle de ligne droite ; et si la distance est inférieure ou égale au seuil de distance prédéfini, considérer que le point est un point du modèle de cercle ou du modèle de ligne droite ; et
étape Sf : déterminer si un nombre de points dans le modèle de cercle ou le modèle de ligne droite est supérieur à un seuil de nombre de points prédéfini ; si le nombre de points dans le modèle de cercle ou le modèle de ligne droite est supérieur au seuil de nombre de points prédéfini, sélectionner tous les points du modèle de cercle ou du modèle de ligne droite comme points de données, et recalculer le modèle ; et si le nombre de points dans le modèle de cercle ou le modèle de ligne droite est inférieur ou égal au seuil de nombre de points prédéfini, revenir à l'étape Sb.

6. Procédé de détection d'un défaut de soudure d'une batterie au lithium selon la revendication 1, dans lequel l'étape S430 comprend au moins les étapes suivantes :
S431 : extraire un nuage de points d'un plan de boîtier en aluminium de la batterie au lithium, pour obtenir une enveloppe convexe du nuage de points du plan de boîtier en aluminium par l'algorithme Quickhull ;
S432 : déterminer s'il existe un sommet plus haut que le plan de boîtier en aluminium ou plus bas que le plan de boîtier en aluminium dans l'enveloppe convexe ; s'il existe un sommet plus haut ou plus bas que le plan de boîtier en aluminium dans l'enveloppe convexe, exécuter une étape S433 ; et s'il n'existe pas de sommet plus haut ou plus bas que le plan de boîtier en aluminium dans l'enveloppe convexe, considérer qu'il n'y a pas de point de défaut ;
S433 : utiliser les points situés dans un rayon prédéfini autour du sommet comme une première classe de nuages de points suspects de défaut, en prenant le sommet comme centre d'un cercle ;
S434 : calculer les angles entre vecteurs normaux et les caractéristiques de courbure de la première classe de nuages de points suspects de défaut, et acquérir une deuxième classe de nuages de points suspects de défaut sur la base d'un algorithme de regroupement par croissance de régions ;
S435 : comparer les deux classes de nuages de points de défaut et conserver les mêmes nuages de points pour former un ensemble de points de défauts ;
S436 : calculer des informations de défaut à partir d'une boîte englobante des nuages de points de défaut, segmenter des zones de position correspondant aux défauts sur l'image 2D en fonction des nuages de points de défaut, et entrer les zones de position dans le modèle de réseau de détection d'objets YOLO pour une détection de défauts ; et
S437 : juger globalement un score de détection de défaut de la zone de position en fonction d'un niveau de confiance du modèle de réseau de détection d'objets YOLO et des informations de défaut, et déterminer si le score de détection de défaut est supérieur à un quatrième seuil prédéfini ; si le score de détection de défaut est supérieur au quatrième seuil prédéfini, considérer qu'il existe un défaut réel ; et si le score de détection de défaut n'est pas supérieur au quatrième seuil prédéfini, considérer qu'il n'existe pas de défaut réel.

7. Procédé de détection d'un défaut de soudure d'une batterie au lithium selon la revendication 6, dans lequel l'acquisition d'une deuxième classe de nuages de points suspects de défaut sur la base d'un algorithme de regroupement par croissance de régions comprend spécifiquement :
considérer le nuage de points du plan de boîtier en aluminium comme un nuage de points plan lisse, et calculer les vecteurs normaux et les valeurs de courbure de tous les points du nuage de points du plan de boîtier en aluminium ;
sélectionner aléatoirement un point quelconque du nuage de points du plan de boîtier en aluminium comme point initial, comparer successivement les angles entre vecteurs normaux et les différences de valeurs de courbure entre le point initial et les points restants, et déterminer si les angles entre vecteurs normaux sont supérieurs à un cinquième seuil prédéfini et si les différences de valeurs de courbure sont supérieures à un sixième seuil prédéfini ; et
classer les points dont les angles entre vecteurs normaux sont inférieurs ou égaux au cinquième seuil prédéfini et dont les différences de valeurs de courbure sont inférieures ou égales au sixième seuil prédéfini dans un ensemble de regroupement comme points d'une même classe ; et classer les points dont les angles entre vecteurs normaux sont supérieurs au cinquième seuil prédéfini et dont les différences de valeurs de courbure sont supérieures au sixième seuil prédéfini dans la deuxième classe de nuages de points suspects de défaut.

8. Procédé de détection d'un défaut de soudure d'une batterie au lithium selon la revendication 1, comprenant en outre une étape S500 : acquérir différents types de nuages de points de défaut, calculer des paramètres de détection secondaires des défauts, et confirmer s'il existe des défauts correspondants dans la batterie au lithium ; dans lequel l'étape S500 comprend spécifiquement :
S510 : acquérir différents types de nuages de points de défaut, et calculer une boîte englobante spatiale de l'ensemble de points de défauts ;
S520 : calculer les paramètres de détection secondaires des défauts sur la base de la boîte englobante spatiale de l'ensemble de points de défauts, les paramètres de détection secondaires comprenant au moins une longueur, une largeur, une hauteur, une aire de projection et une valeur de courbure de l'ensemble de points de défauts, le processus de calcul comprenant spécifiquement : calculer une longueur, une largeur et une hauteur de la boîte englobante spatiale, et utiliser les résultats de calcul comme la longueur, la largeur et la hauteur de l'ensemble de points de défauts ; calculer une aire d'un plan projectif bidimensionnel de l'ensemble de points de défauts, et une valeur de courbure de chaque point dans l'ensemble de points de défauts, sommer les valeurs de courbure de tous les points et effectuer une moyenne, et utiliser le résultat de calcul comme valeur de courbure de l'ensemble de points de défauts ; et
S530 : déterminer si tous les paramètres de détection secondaires sont supérieurs aux seuils correspondants selon un cahier des charges du projet et les seuils correspondants des paramètres de détection secondaires de l'ensemble de points de défauts, si tous les paramètres de détection secondaires sont supérieurs aux seuils correspondants, confirmer qu'il existe des défauts correspondants dans la batterie au lithium, et sinon, juger qu'il n'existe pas de défauts correspondants dans la batterie au lithium.

9. Système de détection d'un défaut de soudure d'une batterie au lithium, comprenant :
un module d'acquisition d'images, configuré pour acquérir une image de profondeur et une image 2D en niveaux de gris d'une cellule de batterie au lithium, et effectuer un traitement de filtrage ;
un module d'extraction de zones de détection, configuré pour extraire, sur l'image de profondeur filtrée de la cellule de batterie, des zones de détection de défauts pour obtenir des zones de détection correspondant à des défauts de divers types, les zones de détection comprenant au moins l'une parmi une zone de détection de défauts de concavité et de convexité, une zone de détection de déviation de soudure et une zone de détection de défauts de piqûre ;
un module de génération de nuages de points, configuré pour générer, à partir de l'image de profondeur, un nuage de points linéaire tridimensionnel correspondant à chaque zone de détection ; et
un module de détection de défauts, configuré pour effectuer un calcul parallèle sur les images de profondeur et les nuages de points linéaires tridimensionnels des zones de détection, respectivement, pour détecter les défauts correspondants, le module de détection de défauts comprenant au moins l'un d'un module de détection de défauts de concavité et de convexité, d'un module de détection de déviation de soudure et d'un module de détection de défauts de piqûre ;
le module de détection de défauts de concavité et de convexité étant configuré pour détecter la zone de détection de défauts de concavité et de convexité sur la base d'un algorithme Quickhull et d'une méthode de recherche des plus proches voisins basée sur la distance euclidienne ; et
le module de détection de déviation de soudure étant configuré pour détecter la zone de détection de déviation de soudure sur la base d'une détection de défauts par IA et d'une détection de défauts 3D, comprenant au moins l'étape suivante :
S427 : fusionner le résultat de détection de défauts par IA obtenu en S422 avec le résultat de détection de défauts 3D obtenu en S425, et conserver un même résultat de défaut dans un même ensemble pour obtenir un ensemble de points de défauts ; et
le module de détection de défauts de piqûre étant configuré pour détecter la zone de détection de défauts de piqûre sur la base de l'algorithme Quickhull et d'un modèle de réseau de détection d'objets YOLO.

10. Support de stockage lisible par ordinateur, sur lequel est stocké un programme de détection d'un défaut de soudure d'une batterie au lithium, le programme, lorsqu'il est exécuté par un processeur, mettant en œuvre les étapes du procédé de détection d'un défaut de soudure d'une batterie au lithium selon l'une quelconque des revendications 1 à 8.
